# EUROPEAN PATENT APPLICATION

(11) **EP 3 032 552 A1**
(43) Date of publication of application: **15.06.2016**
(21) Application number: 14197008.7
(22) Date of filing: 09.12.2014
(51) Int. Cl.: H01F 27/08, H05K 7/20

(54) **A cooling system for a high voltage electromagnetic induction device, a system and a method of cooling the same**

(71) Applicant: ABB Technology Ltd, 8050 Zürich (CH)
(72) Inventor: Savenstedt, Anna, 771 41 Ludvika (SE); Fransson, Dan, 784 33 Borlänge (SE); Saers, Robert, 722 46 Västerås (SE); Erikmats, Anders, 790 26 Enviken (SE)
(74) Representative: Savela, Reino Aleksi

(57) **Abstract**

The present disclosure relates to a cooling system (1) for a high voltage electromagnetic induction device. The cooling system (1) comprises a plurality of fans (3-1,...,3-N), a plurality of electric motors (5-1,...,5-N), wherein each electric motor (5-1,...,5-N) is arranged to operate a respective fan (3-1,...,3-N) of the plurality of fans (3-1,...,3-N), a plurality of switches (7-1,...,7-N), wherein each switch (7-1,...,7-N) is arranged to control a respective electric motor (5-1,...,5-N) of the plurality of electric motors (5-1,...,5-N), and a control system (11) arranged to individually control each switch (7-1,...,7-N) to thereby obtain individual control of each fan (3-1,...,3-N). This disclosure furthermore relates to a system comprising a high voltage electromagnetic induction device and a cooling system, and to a method of cooling a high voltage electromagnetic induction device.

## Description

### TECHNICAL FIELD

The present disclosure generally relates to cooling of electromagnetic induction devices. In particular, it relates to a cooling system for cooling an electromagnetic induction device, to a power system comprising a cooling system and an electromagnetic induction device, and to a method of cooling an electromagnetic induction device.

### BACKGROUND

High voltage electromagnetic induction devices, such as power transformers, comprise windings, typically electrically insulated conductors, wound around a magnetic core. The windings of a high voltage electromagnetic induction devices are often subjected to currents that result in heat development in the windings that would damage the electrical insulation of the conductors, and even the conductors, if cooling of the windings would not be provided.

There are a number of ways in which a high voltage electromagnetic induction device may be cooled. Cooling may for example be performed by means of natural or forced convection of a liquid such as oil circulating through the tank of high voltage electromagnetic induction device. For higher voltages, it is common to utilise a dedicated cooling system comprising a number of motor-fan units is to maintain the winding temperature within an acceptable range.

Today, these cooling systems typically comprise a number of groups each comprising a plurality of fans. Each group is controllable either by means of a respective relay which turns the group on/off and provides a fixed-speed operation of the fans of the group, or by means of a respective variable frequency drive (VFD), which enables variable speed operation of the fans of the group.

The fixed-speed operation of groups of fans provides only a number of discrete cooling levels corresponding to the number of groups, but is on the other hand relatively inexpensively. Variable speed operation of groups of fans by means of VFDs provides higher efficiency than fixed-speed operation, but requires high capital investment due to the cost of the VFDs.

### SUMMARY

An object of the present disclosure is to provide a cooling system, a system and a method of cooling an electromagnetic induction device which solve or at least mitigate the problems of the prior art.

Hence, according to a first aspect of the present disclosure there is provided a cooling system for a high voltage electromagnetic induction device, wherein the cooling system comprises a plurality of fans; a plurality of electric motors, wherein each electric motor is arranged to operate a respective fan of the plurality of fans; a plurality of switches, wherein each switch is arranged to control a respective electric motor of the plurality of electric motors; and a control system arranged to individually control each switch to thereby obtain individual control of each fan.

By means of being able to individually control each fan, cooling operation with almost the same continuous variation of cooling capacity as with motor speed control can be obtained while the utilisation of expensive drives may be avoided. Moreover, the fans may be utilised in an alternating manner in order to provide even mechanical wear of the fans and electric motors, and for avoiding that fans are blocked due to for example corrosion, dirt or bird nests, which is common in traditional group control.

Furthermore, service can be postponed in the event of a single fan failure. This would not be possible in the prior art solutions, in which case the failure of a single fan would result in that the entire group containing the failed fan would be taken out of service.

Additionally, very noisy fans can be less prioritised. This would not be possible to the same extent in case of group control of fans.

Moreover, the dimensioning and amount of the cabling connected to the motors may be reduced, because each electric motor is individually fed with current from a bus, instead of each group of fans/electric motors being fed with current that can drive all electric motors of a group.

According to one embodiment the control system is arranged to control a start of the plurality of fans in a sequential manner. The start-up or inrush current to the electric motors may thereby be reduced, because the electric motors are started one after the other, instead of groups as in previous solutions.

According to one embodiment the control system is arranged to control a consecutive start of any two fans with a delay which is long enough that a steady-state current of an electric motor that is arranged to operate a first of the two fans is obtained.

According to one embodiment each fan, associated electric motor and associated switch are arranged inside a common cooling assembly housing.

According to one embodiment the control system has a control system housing, wherein the control system is arranged separately from the plurality of fans, the plurality of electric motors and the plurality of switches.

In existing solutions, the switches are provided in the control cabinet. By arranging the switches in a common housing with the associated electric motor and fan, the size of the control cabinet, i.e. the control system housing, may be reduced and allows the control system housing and control system to remain in a mounted state during transportation. Costs related to assembly time at the site of installation may thereby be reduced.

According to one embodiment the cooling system comprises an AC bus or a DC bus, and wherein each electric motor is connectable to the AC bus or DC bus via a respective switch.

One embodiment comprises a plurality of sensor systems, wherein each sensor system is arranged to detect at least one parameter associated with a respective fan.

According to one embodiment the at least one parameter relates to an operational state of a fan.

According to one embodiment each sensor system is arranged to transmit parameter data, pertaining to the at least one parameter, to the control system.

According to one embodiment the control system is arranged to transmit alarm data to an operator station in case the parameter data received from a sensor system is indicative of an alarm situation.

According to one embodiment each switch comprises a relay.

One embodiment comprises a pump arranged to circulate a cooling liquid in a high voltage electromagnetic induction device, an electric motor arranged to operate the pump, and a switch arranged to control the electric motor, wherein the control system is arranged to control the switch.

One embodiment comprises a plurality of pumps arranged to circulate a cooling liquid in a high voltage electromagnetic induction device, a plurality of electrical motors, each being arranged to operate a respective pump, a plurality of switches, each being arranged to control a respective electric motor, wherein the control system is arranged to individually control each switch to thereby obtain individual control of each pump.

According to a second aspect of the present disclosure there is provided a system comprising a high voltage electromagnetic induction device, and a cooling system according to the first aspect.

According to one embodiment the high voltage electromagnetic induction device is a transformer or a reactor.

According to a third aspect of the present disclosure there is provided a method of cooling a high voltage electromagnetic induction device by means of a cooling system that comprises a plurality of fans, a plurality of electric motors, wherein each electric motor is arranged to operate a respective fan of the plurality of fans, a plurality of switches, wherein each switch is arranged to control a respective electric motor of the plurality of electric motors, and a control system arranged to individually control each switch, wherein the method comprises individually controlling any fan of the plurality of fans by controlling the corresponding switch.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, the steps of the method need not necessarily have to be carried out in the indicated order unless explicitly stated.

### BRIEF DESCRIPTION OF THE DRAWINGS

The specific embodiments of the inventive concept will now be described, by way of example, with reference to the accompanying drawings, in which:
Fig. 1 is a block diagram of an example of a cooling system for an electromagnetic induction device;
Fig. 2 is a schematic view of an example of a system comprising a cooling system and a high voltage electromagnetic induction device;
Figs 3a-3d show example configurations for operating fans of the cooling system in Fig. 2; and
Fig. 4 is a flowchart of a method of cooling an electromagnetic induction device by means of a cooling system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The cooling systems described herein are arranged to cool a high voltage electromagnetic induction device by means of providing individual control of each cooling element, e.g. fan, of the cooling system. According to one variation, the cooling system comprises exactly N fans, N motors and N switches, N being an integer equal to or greater than two.

Each motor is arranged to operate a respective fan of the N fans, and each switch is arranged to control a respective motor of the N motors. There is hence a one-to-one correspondence between the fans, motors, and switches. The cooling system comprises a control system arranged to individually control each switch. Individual control of each fan may thereby be provided.

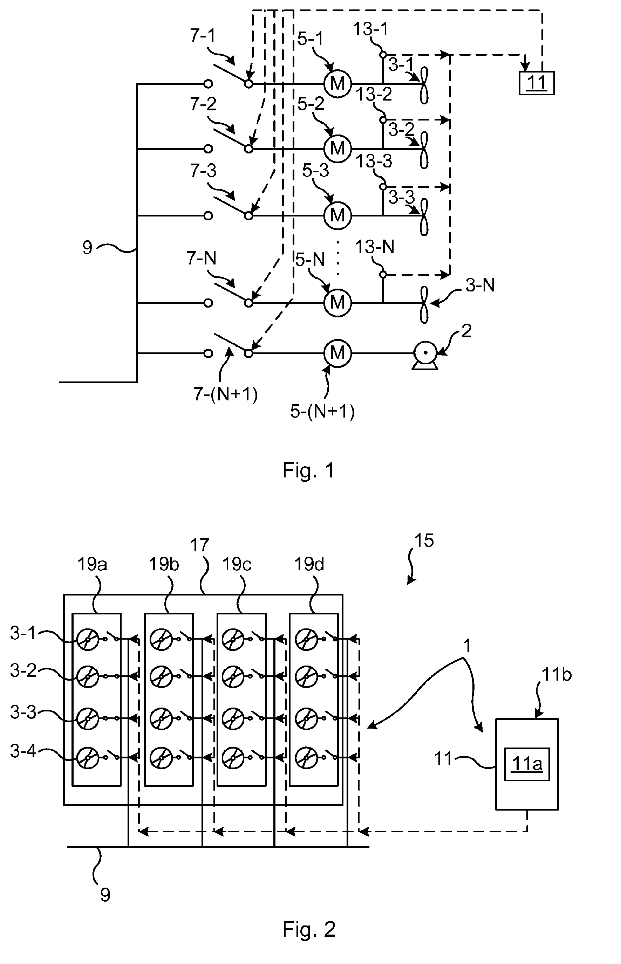

The cooling system will now be described in more detail by means of examples with reference to Figs 1-4.

Fig. 1 shows an example of a cooling system 1 for cooling a high voltage electromagnetic induction device. Cooling system 1 comprises a plurality of fans 3-1 to 3-N arranged to cool a high voltage electromagnetic induction device, a plurality of electric motors 5-1 to 5-N arranged to operate a respective fan 3-1 to 3-N, and a plurality of switches 7-1 to 7-N arranged to control a respective electric motor 5-1 to 5-N. Each switch 7-1 to 7-N is arranged to provide on/off control of a respective electric motor 5-1 to 5-N. Each switch may according to one variation comprise a relay that may be electromechanical or electrical, in the latter case e.g. in the form of one or more power electronic devices such as insulated-gate bipolar transistors (IGBT) and/or thyristors.

The cooling system 1 comprises a control system 11 arranged to control each switch 7-1 to 7-N individually. The control system 11 is thus arranged to control opening and closing of each switch 7-1 to 7-N. Individual control of each fan 3-1 to 3-N of the plurality of fans 3-1 to 3-N may thereby be provided.

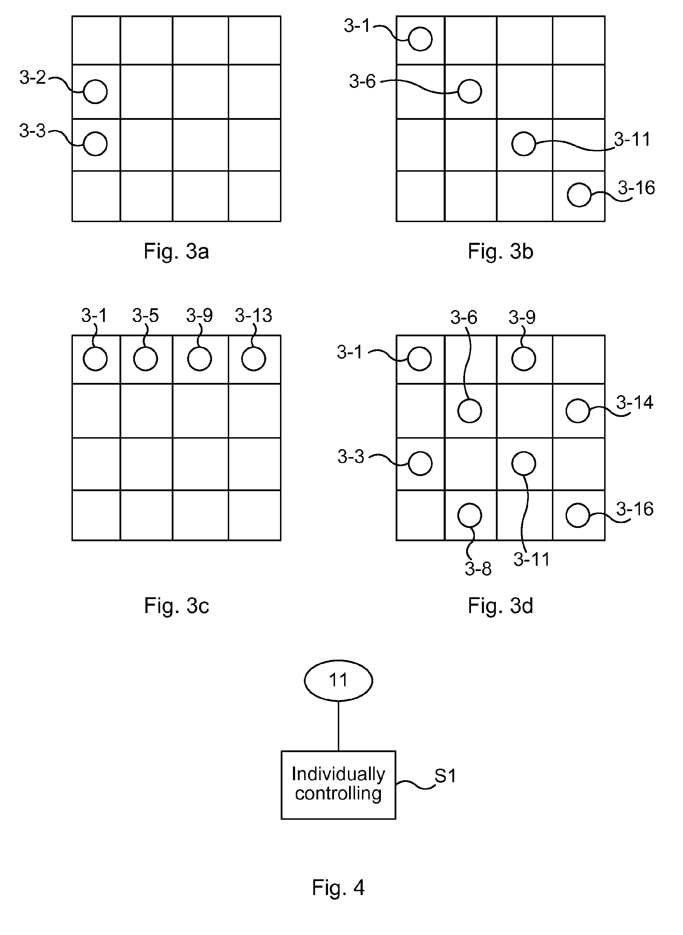

The control system 1 may comprise a processor 11a, as shown in Fig. 2, which, when executing computer-executable components loaded from a storage unit, is arranged to carry out a step S1 of individually controlling any fan 3-1 to 3-N by controlling the corresponding switch 7-1 to 7-N, as shown in Fig. 4.

Each set of associated fan 3-1,..,3-N, electric motor 5-1,...,5-N and switch 7-1,...,7-N define a cooling assembly. As an example, fan 3-1, electric motor 5-1 and switch 7-1 define a cooling assembly. The cooling system 1 thus comprises N cooling assemblies, corresponding to the number of fans. An alternative manner to express the individual control of the fans 3-1,...,3-N by means of the control system 11, is that the control system 11 is arranged to individually control each cooling assembly.

The control system 11 is according to one variation arranged to start the fans 3-1 to 3-N in a sequential manner. The control system 11 is hence arranged to send control signals to the switches 7-1 to 7-N sequentially, or in a manner which enables the circuitry associated with the switches 7-1 to 7-N to start any two consecutively started fans 3-1 to 3-N with a delay. The control system 11 is thus arranged to start the fans 3-1 to 3-N with a delay between any pair of consecutively started fans. According to one variation, the delay is long enough for each electric motor to obtain a steady state operation in which they are consume a steady-state current. This delay may for example be about 10 seconds for certain implementations, but generally depends on the rating of the motor, construction of the fan etc.

The electric motors 5-1 to 5-N are connectable to an AC bus or a DC bus 9 via a respective switch 7-1 to 7-N. The electric motors 5-1 to 5-N are hence either AC motors, in case they are to be connected to an AC bus, or DC motors, in case they are to be connected to a DC bus. When a switch 7-1,...,7-N is set in its closed state by the control system 11 the corresponding electric motor 5-1,...,5-N is fed with a current from the AC bus or DC bus 9, and hence set in operational mode to drive its associated fan 3-1,...,3-N.

The cooling system 1 may according to one variation comprise the AC bus or DC bus 9 to which the electric motors 5-1 to 5-N are connectable via a respective switch 7-1 to 7-N.

The cooling system 1 may according to one variation comprise a plurality of sensor systems 13-1 to 13-N. Each sensor system 13-1 to 13-N is associated with a respective fan 3-1 to 3-N and/or a respective electric motor 5-1 to 5-N. Each sensor system 13-1 to 13-N is arranged to detect at least one parameter associated with a respective fan 3-1 to 3-N. The at least one parameter relates to the operational state of the corresponding fan 3-1 to 3-N. The at least one parameter may for example be revolutions per minute of a fan, electric motor torque, or noise level, thereby providing information about whether a fan 3-1,...,3-N is operating properly or not and/or the noise level of a fan for obtaining a measure of local noise pollution by a specific fan.

Each sensor system 13-1 to 13-N is according to one variation arranged to transmit parameter data that pertains to the at least one parameter, to the control system 11. The sensor systems 13-1 to 13-N are arranged to communicate with the control system 11 via a communications network that may be wired, realised for example by means of electric or optical cables or by means of superimposing the parameter data onto the AC or DC bus voltage, it may wireless, for example a Wireless LAN such as Wi-Fi, or 2G, 3G, 4G or any other suitable wireless protocol. Communication between the control system 11 and the sensor systems 13-1 to 13-N is shown by means of dashed lines in Figs 1 and 2. The communications network may form part of a public communications network, or it may be a unique communications network for the cooling system 1 and/or for the high voltage electromagnetic induction device which the cooling system 1 is intended to cool.

The control system 11 is arranged to receive the parameter data from the sensor systems 13-1 to 13-N. The control system 11 may according to one variation be arranged to evaluate the parameter data, for example to determine whether the fans operate as intended.

The control system 11 may according to one variation be arranged to transmit alarm data to an operator station or control room in case the control system 11 has determined that the parameter data received from a sensor system 13-1,...,13-N is indicative of an alarm situation. An alarm situation may for example arise if a required cooling capacity for a specific load of the high voltage electromagnetic induction device cannot not be provided, e.g. if one or several fans for some reason are unable to operate according to specifications.

The control system 11 may according to one variation be arranged to transmit the parameter data to an operator station or control room, for diagnostic purposes, which in turn may be utilised for creating statistical data, for planned services, warnings or for failure investigations.

The cooling system 1 may according to one variation comprise a pump 2 arranged to provide forced convection of a cooling liquid, e.g. an oil, in a high voltage electromagnetic induction device, an electric motor 5-(N+1) arranged to operate the pump 2, and a switch 7-(N+1) arranged to control the electric motor 5-(N+1). The control system 11 is in this case arranged to control the switch 7-(N+1). In particular, the control system 11 is arranged to control the switch 7-(N+1) between an open state, and a closed state in which the electric motor 5-(N+1) operates the pump 2. The control system 11 is arranged to independently control the switch 7-(N+1) relative to switches 7-1 to 7-N. Individual control of the pump 2 may thereby be provided. According to one variation the cooling system may comprise more than one pump/electric motor/switch combination.

The control system 11 is according to one variation arranged to control the switches 7-1 to 7-N, and switch 7-(N+1) in case the cooling system 1 comprises a pump and electric motor 5-(N+1), based on a control signal received from a central computer, which control signal in turn is based on load forecast for the high voltage electromagnetic device that the cooling system 1 is intended to cool. The electromagnetic induction device may thereby be subjected to pre-cooling by the cooling system 1 for expected future load conditions.

Fig. 2 is a schematic view of an example of a system 15 comprising a high voltage electromagnetic device 17 and a cooling system 1. The fans of the cooling system 1 are installed in a manner in which they can provide cooling of the electromagnetic induction device windings, either directly or indirectly e.g. by cooling a cooling liquid.

Control signals from the control system 11 to the switches is shown with dashed lines. Power connections are shown with solid lines. Although the fans of the exemplified cooling system are grouped in four groups of four fans each, individual control of each fan is provided by means of the control system 11. In Fig. 2, only fans 3-1 to 3-4 of the leftmost group are indicated with reference numerals. In this example, fans 3-2 and 3-3 are currently operated by their respective electric motor, as shown by their switches being closed, while fans 3-1 and 3-4 are turned off. It should be noted that although the system 15 comprises sixteen fans this is merely one example, and as previously explained, that N may be any positive integer equal to or greater than two.

As previously mentioned each set of fan, electric motor and switch form a cooling assembly. Each such set is arranged in a common cabinet, a cooling assembly housing 19a, 19b, 19c, 19d. In the example shown in Fig. 2, several cooling assemblies are arranged in a common cooling assembly housing 19a, 19b, 19c, 19d; fans 3-1 to 3-4 are for example arranged in cooling assembly housing 19a. Alternatively, each cooling assembly may be have its own unique housing.

The control system 11 comprises a control system housing 11b. The control system 11 is hence contained in an individual housing, different from and physically separated from the cooling assembly housing(s).

Figs 3a-3d show four examples of configurations for operating the fans of a cooling system according to the present disclosure in general and the cooling system 1 in Fig. 2 in particular. Each figure shows schematically a grid of four times four fans. Each box corresponds to a fan, and a circle in a box indicates that a fan in that box is in its on-state or operational state, i.e. the corresponding switch is closed, and the corresponding electric motor thus drives the fan. An empty box indicates that that fan is in its off-state with the corresponding switch hence being open.

Fig. 3a shows the exact configuration of the set-up shown in Fig. 2, with fans 3-2 and 3-3 being in an operational state, with the remaining fourteen fans being in their off-state.

Fig. 3b shows an example in which fans 3-1, 3-6, 3-11 and 3-16, i.e. the diagonally arranged fans, are in their operational state, while the remaining fans are in their off-state.

Fig. 3c shows another example, in which only fans 3-1, 3-5, 3-9 and 3-13 of the uppermost row are in their operational state, while the remaining fans are in their off-state.

Fig. 3d shows an example with the fans in a checkerboard configuration with fans 3-1, 3-3, 3-6, 3-8, 3-9, 3-11, 3-14 and 3-16 being in their operational state, while the remaining fans are in their off-state.

In general, there are 2^{N} configurations in which N fans 3-1,...3-N, or cooling assemblies, may be operated by means of the control system 11.

The cooling systems presented herein may beneficially be utilised for cooling a high voltage electromagnetic induction device, such as a transformer e.g. a distribution transformer or a power transformer, or a reactor.

In variations in which the cooling system comprises several pumps, these may according to one variation be controlled in the same manner as the fans, to obtain individual pump control. The control system may hence according to one variation be arranged to control respective switches of electric motors, each being arranged to operate a respective pump, to enable individual control of the pumps. This may provide reduced power consumption, and essentially all other benefits that the individual fan control provides.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A cooling system (1) for a high voltage electromagnetic induction device (17), wherein the cooling system (1) comprises:
a plurality of fans (3-1,...,3-N),
a plurality of electric motors (5-1,...,5-N), wherein each electric motor (5-1,...,5-N) is arranged to operate a respective fan (3-1,...,3-N) of the plurality of fans (3-1,...,3-N),
a plurality of switches (7-1,...,7-N), wherein each switch (7-1,...,7-N) is arranged to control a respective electric motor (5-1,...,5-N) of the plurality of electric motors (5-1,...,5-N), and
a control system (11) arranged to individually control each switch (7-1,...,7-N) to thereby obtain individual control of each fan (3-1,...,3-N).

2. The cooling system (1) as claimed in claim 1, wherein the control system (11) is arranged to control a start of the plurality of fans (3-1,...,3-N) in a sequential manner.

3. The cooling system (1) as claimed in claim 2, wherein the control system (11) is arranged to control a consecutive start of any two fans (3-1,...,3-N) with a delay which is long enough that a steady-state current of an electric motor (5-1,...,5-N) that is arranged to operate a first of the two fans (3-1,...,3-N) is obtained.

4. The cooling system (1) as claimed in any of the preceding claims, wherein each fan (3-1,...,3-N), associated electric motor (5-1,...,5-N) and associated switch (7-1,...,7-N) are arranged inside a common cooling assembly housing (19a, 19b, 19c, 19d).

5. The cooling system (1) as claimed in claim 4, wherein the control system (11) has a control system housing (11b), wherein the control system (11) is arranged separately from the plurality of fans (3-1,...,3-N), the plurality of electric motors (5-1,...,5-N) and the plurality of switches (7-1,...,7-N).

6. The cooling system (1) as claimed in any of the preceding claims, comprising an AC bus or a DC bus (9), and wherein each electric motor (5-1,...,5-N) is connectable to the AC bus or DC bus (9) via a respective switch (7-1,...,7-N).

7. The cooling system (1) as claimed in any of the preceding claims, comprising a plurality of sensor systems (13-1,...,13-N), wherein each sensor system (13-1,...,13-N) is arranged to detect at least one parameter associated with a respective fan (3-1,...,3-N).

8. The cooling system (1) as claimed in claim 7, wherein the at least one parameter relates to an operational state of a fan (3-1,...,3-N).

9. The cooling system (1) as claimed in claim 7 or 8, wherein each sensor system (13-1,...,13-N) is arranged to transmit parameter data, pertaining to the at least one parameter, to the control system (11).

10. The cooling system (1) as claimed in claim 9, wherein the control system (11) is arranged to transmit alarm data to an operator station in case the parameter data received from a sensor system is indicative of an alarm situation.

11. The cooling system (1) as claimed in any of the preceding claims, wherein each switch (7-1,...,7-N) comprises a relay.

12. The cooling system (1) as claimed in any of the preceding claims, comprising a pump (2) arranged to circulate a cooling liquid in a high voltage electromagnetic induction device (17), an electric motor (5-(N+1)) arranged to operate the pump (2), and a switch (7-(N+1)) arranged to control the electric motor (5-(N+1)), wherein the control system (11) is arranged to control the switch (7-(N+1)).

13. The cooling system (1) as claimed in claim 12, comprising a plurality of pumps (2) arranged to circulate a cooling liquid in a high voltage electromagnetic induction device (17), a plurality of electrical motors (5-(N+1)), each being arranged to operate a respective pump (2), a plurality of switches (7-(N+1)), each being arranged to control a respective electric motor (7-(N+1)), wherein the control system (11) is arranged to individually control each switch (7-(N+1)) to thereby obtain individual control of each pump (2).

14. A system (15) comprising a high voltage electromagnetic induction device (17), and a cooling system (1) as claimed in any of claims 1-13.

15. The system (15) as claimed in claim 14, wherein the high voltage electromagnetic induction device (17) is a transformer or a reactor.

16. A method of cooling a high voltage electromagnetic induction device (17) by means of a cooling system (1) that comprises a plurality of fans (3-1,...,3-N), a plurality of electric motors (5-1,...,5-N), wherein each electric motor (5-1,...,5-N) is arranged to operate a respective fan (3-1,...,3-N) of the plurality of fans (3-1,...,3-N), a plurality of switches (7-1,...,7-N), wherein each switch (7-1,...,7-N) is arranged to control a respective electric motor (5-1,...,5-N) of the plurality of electric motors (5-1,...,5-N), and a control system (11) arranged to individually control each switch (7-1,...,7-N), wherein the method comprises individually controlling (S1) any fan (3-1,...,3-N) of the plurality of fans (3-1,...,3-N) by controlling the corresponding switch (7-1,...,7-N).
